# EUROPEAN PATENT APPLICATION

(11) **EP 4 464 669 A1**
(43) Date of publication of application: **20.11.2024**
(21) Application number: 23382465.5
(22) Date of filing: 18.05.2023
(51) Int. Cl.: C01G 49/00

(54) **IRON OXIDE NANOPARTICLES DOPED WITH GA AND ZN**

(71) Applicant: Consejo Superior de Investigaciones Cientificas, 28006 Madrid (ES)
(72) Inventor: Herraiz Pérez, Aitor, Madrid (ES); Herranz Rabanal, Fernando, Madrid (ES)
(74) Representative: Pons

(57) **Abstract**

The present invention relates to an iron oxide nanoparticle (IONP) doped with the metals Ga and Zn. Likewise, the present invention relates to the use of said nanoparticle as a positive contrast agent for magnetic resonance imaging (MRI), in particular, as a positive contrast agent (T₁-MRI). Therefore, the invention could belong to the field of metallic nanoparticles and magnetic resonance imaging (MRI).

## Description

The present invention relates to an iron oxide nanoparticle (IONP) doped with the metals Ga and Zn. Likewise, the present invention relates to the use of said nanoparticle as a positive contrast agent for magnetic resonance imaging (MRI), in particular, as a positive contrast agent (T₁-MRI). Therefore, the invention could belong to the field of metallic nanoparticles and magnetic resonance imaging (MRI).

### STATE OF THE ART

Currently, Gadovist and other compounds that have an activity given by gadolinium (Gd) atoms are used as an MRI contrast agent (see Catherine, D. et al. "Gadolinium-Based Contrast Agent Use, Their Safety, and Practice Evolution" Kidney360 2020, 1(6), 561-568). The contrast provided by compounds of this type is called positive contrast or T1-MRI. This contrast is that which provides more detailed pathophysiological information and, above all, images that are easier to interpret, which aids in the diagnosis. Gd has very good imaging properties since it exhibits a bright signal on MRI, *r*₁ values of ~6 mM⁻¹s⁻¹ and very low *r*₂/*r*₁ ratios (~2); however, it is a toxic compound, for example, it cannot be used on patients with kidney problems. Furthermore, for linear compounds, it has been shown that part of said metal ends up forming deposits in the brain. On the other hand, it exhibits a limited number of applications due to its physico-chemical features. Since the compounds are low molecular weight compounds, they have very low blood circulation times, which prevents a large number of applications that require the contrast agent to circulate for a long time through the bloodstream from being carried out.

On the other hand, iron oxide nanoparticles (IONPs) have been approved by the FDA as contrast agents for magnetic resonance imaging (MRI) and improve the number of applications and biocompatibility since they are less toxic (see Thakor, A. S. et al. J. Nucl. Med. 2016, 57(12), 1833-1837). The first nanoparticles that were approved had very good biocompatibility and toxicological profile; however, the signal they provided on MRI is the so-called negative contrast or T₂-MRI. The opposite of positive contrast or T₁-MRI. In negative contrast images, the nanoparticles provide a black signal, a darkening of the areas where they accumulate. For many applications, this type of signal makes it impossible to distinguish the signal given by the nanoparticles from the signal from the tissues, which have many naturally dark areas. This fact is particularly important for cardiovascular applications, for example. This type of contrast did not have a clear clinical application, which has led to the abandonment of these products.

Therefore, it would be desirable to have contrast agents that, while providing the clinically useful signal that is typical of positive contrast (T₁-MRI), are biocompatible and have a high number of applications.

### DESCRIPTION OF THE INVENTION

In a first aspect, the invention relates to an iron oxide nanoparticle (IONP) comprising an iron oxide core doped with Zn and Ga, wherein the nanoparticle is characterised in that it has:
- an *r*₁ value of between 17 and 22 mM⁻¹s⁻¹, preferably 20 mM⁻¹s⁻¹, measured at 1 Tesla, measured in a relaxometer at IONP concentrations comprised between 0.4 and 2 mM with an inversion-recovery sequence;
- an *r*₂ value of 34 and 66 mM⁻¹s⁻¹, preferably 43 mM⁻¹s⁻¹, measured at 1 Tesla, measured in a relaxometer at IONP concentrations between 0.4 and 2 mM with a spin echo sequence;
- an *r*₂/*r*₁ ratio ≤ 3, preferably ≤ 2.5;
- a core size between 3 and 5 nm, preferably 4 nm, measured by TEM;
- a hydrodynamic size between 8 and 15 nm, preferably 10 nm, measured by DLS; and
- a percentage by mass between 20 - 30%, preferably 25%, of organic coating of the IONP surface, preferably where the organic coating is sodium citrate dihydrate.

Another aspect of the invention relates to the use of the nanoparticle defined above, as a contrast agent for magnetic resonance imaging (MRI).

In another embodiment, the invention relates to the use of the nanoparticle defined above, as a positive contrast agent (T₁-MRI).

Throughout the description and the claims, the word "comprises" and its variants are not intended to exclude other technical features, additives, components or steps. For those skilled in the art, other objects, advantages and features of the invention may be partially deduced from both the description and the embodiment of the invention. The following examples and figures are provided by way of illustration and are not intended to limit the present invention.

### BRIEF DESCRIPTION OF THE FIGURES

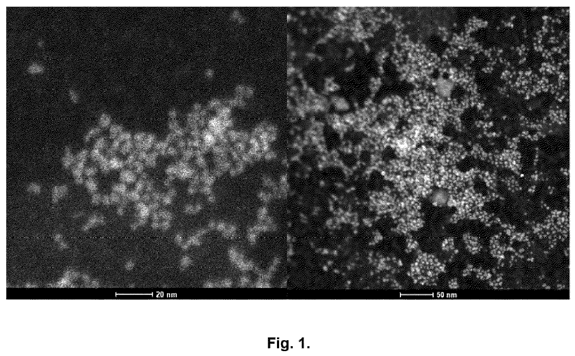

**Fig. 1** shows two dark field transmission electron microscopy (HAADF-STEM) images in which the core of the nanoparticles can be seen at two magnifications.

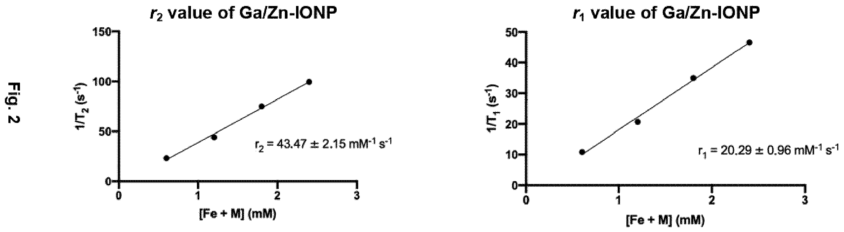

**Fig. 2** shows the fit of the relaxometric measurements for obtaining the values of *r*₁ and *r*₂. Figure 2A shows the fit for the values of *r*₂ and Figure 2B for *r*₁, said values being obtained by measuring the values of T₂ and T₁ at different concentrations of the nanoparticles in an aqueous suspension.
Fig. 3 shows an MRI angiography of a healthy mouse using the GaZnIONPs at an iron concentration of 0.1 mmol Fe/Kg, approved for use in humans.
Fig. 4 shows axial images of the carotid arteries of a mouse: (a) before injecting, (b) 15 minutes after injection, (c) 45 minutes after injection and (d) 120 minutes after injection of GaZnIONP at an iron concentration of 0.05 mmol Fe/Kg, half the amount approved for use in humans.
Fig. 5 shows axial images of the carotid arteries of a mouse: (a) before injecting, (b) 15 minutes after injection, (c) 45 minutes after injection and (d) 120 minutes after injection of Gadovist (Gd) at 0.05 mmol Gd/Kg.

### EXAMPLES

Next, the invention will be illustrated by means of assays carried out by the inventors.

### Example 1: Synthesis and characterisation of GaZnIONP nanoparticles

For the synthesis of GaZnIONP, iron trichloride hexahydrate (1 equivalent), sodium citrate dihydrate (1 equivalent) and the corresponding metal salts (0.1 - 0.2 equivalents) are dissolved in the corresponding amount of milli-Q water in a reaction vial fitted with a septum. The reaction vial is placed in a thermostatically-controlled silicone bath at 120 degrees and, once thermal equilibrium is reached, hydrazine monohydrate (1.2 equivalents) is added quickly through the septum and the reaction is maintained for 45 minutes at 120 degrees. After this time, the reaction is stopped by placing the reaction vial in an ice/water bath and purification is carried out by size-exclusion chromatography with pre-packed Sephadex G-25 M columns.

GaZnIONPs with ~10 nm hydrodynamic size and ~4 nm core were synthesised.

A thorough characterisation of the nanoparticles was carried out using different techniques:
- The size of the nanoparticles was studied using dynamic light scattering (DLS) to estimate the hydrodynamic radius of the same, transmission electron microscopy (TEM) to verify both the size and the homogeneity of the samples, and X-ray diffraction (XRD) to determine the crystal size (size of the maghemite core). With X-ray diffraction it can also be verified that the nanoparticles have not undergone structural changes due to the incorporation of gallium and zinc in the structure, since the interplanar distances of maghemite remain unchanged. The structure of the nanoparticles was also studied by Fourier-transform infrared spectroscopy, which confirms the presence of citrate groups on the surface and the noticeable maghemite structure in XRD, as well as by thermogravimetric analysis (TGA), which confirms the size of the organic layer (20 - 30% by mass of the nanoparticle on a dry basis) by controlled heating of the sample between 10 and 900 degrees Celsius.
- The composition was assessed by inductively coupled plasma (ICP) spectroscopy, thus confirming the presence of gallium and zinc, and making it possible to know the true concentration and incorporation of these metals in the synthesis process. Analysis by HAADF-STEM (Tecnai F30, FEI) allowed zinc and gallium to be colocalised within the crystalline structure of the nanoparticle.
- The study of the magnetic properties was carried out by vibrating sample magnetometry and the study of the relaxometric properties was carried out by nuclear magnetic resonance (NMR).

It was observed that these nanoparticles exhibit an *r*₁ value of 20 mM⁻¹s⁻¹ and an *r*₂ value of 43 mM⁻¹s⁻¹ in a field of 1 T., which gives an *r*₂/*r*₁, ratio of 2.15. Likewise, they exhibit a core size of 4 nm measured by TEM and a hydrodynamic radius of 15 nm measured by DLS with an organic coating, measured by TGA, of 25% of the total weight.

### Example 2: In vivo results

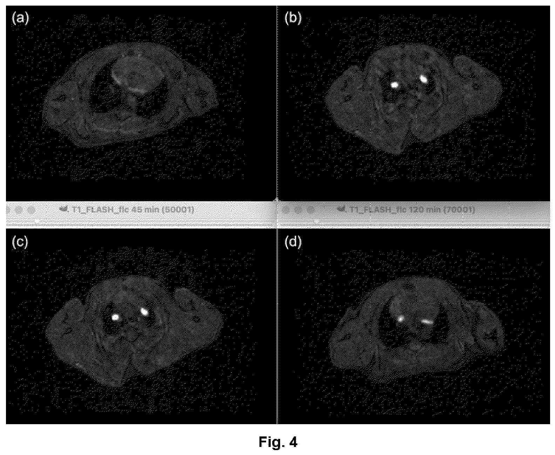

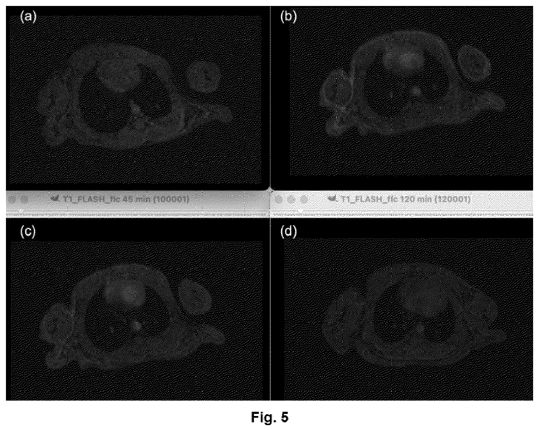

The particles of the invention, GaZnIONP, were tested on *in vivo* angiograms, comparing their results with the reference compound, Gadovist (Gd) (see figures 4 and 5). GaZnIONPs were injected intravenously into healthy mice and imaged at various times with positive contrast.

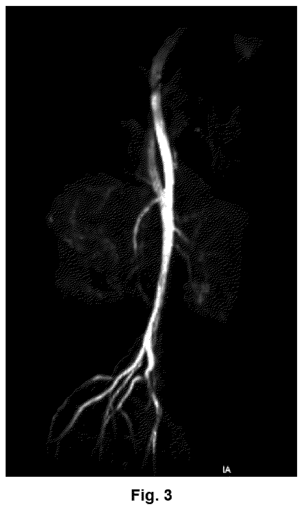

The most relevant results can be summarised in two points:
1.- The GaZnIONPs allow an angiography to be carried out, with positive contrast, at concentrations as low as 0.05 mmol Fe/Kg, half the concentration of that approved for humans in iron oxide nanoparticles (see figure 3).
2.- This signal at low concentrations is higher than that of Gd-based compounds and, very important for many applications, it circulates in blood for much longer.

## Claims

1. An iron oxide nanoparticle comprising an iron oxide core doped with Zn and Ga, wherein the nanoparticle is **characterised in that** it has:
- an *r*₁ value of between 17 and 22 mM⁻¹s⁻¹, measured in a relaxometer at IONP concentrations comprised between 0.4 and 2 mM with an inversion-recovery sequence;
- an *r*₂ value of 34 and 66 mM⁻¹s⁻¹, measured at 1 Tesla measured in a relaxometer at IONP concentrations comprised between 0.4 and 2 mM with a spin echo sequence;
- an *r*₂/*r*₁ ratio ≤ 3;
- a core size between 3 and 5 nm, measured by TEM;
- a hydrodynamic size between 8 and 15 nm, measured by DLS; and
- a percentage by mass between 20 - 30% of organic coating of the IONP surface.

2. The nanoparticle according to claim 1, wherein the value of *r*₁ is 20 mM⁻¹s⁻¹ measured at 1 Tesla.

3. The nanoparticle according to any of claims 1 or 2, wherein the value of *r*₂ is 43 mM⁻¹s⁻¹ measured at 1 Tesla.

4. The nanoparticle according to any of claims 1 to 3, wherein the *r*₂/*r*₁ ratio is ≤ 2.5.

5. The nanoparticle according to any of claims 1 to 4, wherein the core size is 4 nm measured by TEM.

6. The nanoparticle according to any of claims 1 to 5, wherein the hydrodynamic size is 10 nm measured by DLS.

7. The nanoparticle according to any of claims 1 to 6, wherein the organic coating on the IONP surface is sodium citrate dihydrate.

8. The nanoparticle according to any of claims 1 to 7, wherein the percentage by mass of organic coating is 25%.

9. Use of the nanoparticle according to any of claims 1 to 8, as a contrast agent for magnetic resonance imaging.

10. The use of the nanoparticle according to claim 9, as a positive contrast agent for magnetic resonance imaging (T₁-MRI).
